# EUROPEAN PATENT SPECIFICATION

(11) **EP 2 601 417 B1**
(45) Date of publication and mention of the grant of the patent: **25.11.2015**
(21) Application number: 11770515.2
(22) Date of filing: 02.08.2011
(51) Int. Cl.: F16B 5/00, F16B 12/18, F16B 12/46, F16B 12/20, F16B 19/02

(54) **MECHANICAL JOINT FOR REVERSIBLY CONNECTING ELEMENTS WITH ANY ANGLE OF APPROACH**
MECHANISCHES GELENK FÜR DIE REVERSIBLE VERBINDUNG VON ELEMENTEN MIT EINEM BELIEBIGEN KONUSWINKEL
JOINT MÉCANIQUE POUR L'ASSEMBLAGE RÉVERSIBLE D'ÉLÉMENTS SOUS UN ANGLE D'APPROCHE QUELCONQUE

(30) Priority: 22.03.2011 IT CO20110012; 03.08.2010 IT TO20100140 U
(43) Date of publication of application: 12.06.2013
(73) Proprietor: Caccese, Alessandro, 83037 Montecalvo Irpino (IT)
(72) Inventor: Caccese, Alessandro, 83037 Montecalvo Irpino (IT)
(74) Representative: De Ros, Alberto
(86) International application number: PCT/IB2011/053431
(87) International publication number: WO 2012/017386

(56) References cited:
- CH-A5- 625 314
- DE-U1- 8 336 553
- DE-U1-202004 005 780
- US-A- 470 995

## Description

### Field of the invention

The present invention relates to a mechanical joint for joining elements together reversibly and robustly with any angle of approach.

### Prior art

A problem that is common to mechanical joints commonly used in the field of joinery is the impossibility of joining elements that have any arbitrary angle of incidence, reversibly and robustly, avoiding the use of adhesives, of threads made directly in the pieces to be joined or with complicated and expensive recessed shapes. Consider, purely as an example, the joining of elements of the frame of fittings that have an assembly angle of 45°, or, still in the area of fittings, the joining of elements that constitute the upper part of arch frames or V frames, which can have any angle of incidence whatsoever.

From the prior art, some examples are known of mechanical joints for reversible coupling of elements, even allowing mutual rotation, but which have, on the assembly surface, coaxial holes for receiving a metal connecting element.

An example of such a solution is described in Italian utility model No. 252348, also of the applicant of the present application; that utility model describes a mechanical joint that makes it possible to join two or more elements that have coaxial holes on the faying surface, into which a cylindrical element called "connecting pin" is to be inserted. Each element to be joined must moreover have a second hole, of larger diameter, with its axis perpendicular to the first, into which a metal element, called "clamping pin", is inserted. The two metal elements (connecting pin and clamping pin) are fixed, once positioned, with grub screws.

It is clear that the mechanical joint described in this utility model only applies to the joining of elements in which it is possible and (economically) expedient to make a pair of coaxial holes and, for each element, a second hole perpendicular to the first.

However, it is not always possible or expedient to make coaxial holes at the interface between two elements to be joined.

From patent document CH625314A5 there is known, according to its abstract, two mitred profiled-rod portions having a groove are drawn together and held by means of a connection; the connection comprises two hinge parts which are connected to each other via a hinge pin; in each case one locking pin with pegs engages in each case one blind bore in the base of the grooves of the profiled-rod portions; through the locking pins and sliding blocks, in which the pins are mounted, there engage screws which fit in blind bores of the hinge parts and produce the connection by a friction fit; connections of this type can be used for the construction of furnishings, in particular for technical concerns, to be precise for load-bearing or decorative purposes.

Such solution requires to mill the rods to be joined and to have three sides of the connection (or joint) being accessible in order to mount and fix the connection (or joint) to the rods due to the two lateral engage screws and the two locking pins for the two sliding blocks.

### Summary of the invention

The general aim of the present invention is to provide a mechanical joint that overcomes the drawbacks of the prior art and, more especially, to provide a mechanical joint able to join, reversibly and robustly, elements with any angle of approach.

These and other aims are achieved by the mechanical joint having the technical features set out in the claims appended hereto, which form an integral part of the present description.

The idea on which the present invention is based is to use, for joining, a pin that has an articulation at an intermediate point.

### Description of the drawings

The technical features of the present invention as well as its advantages will become apparent from the following description, which should be examined together with the annexed drawings, in which:
Fig. 1 shows a three-dimensional view of the assembly of two elements by means of a joint according to the present invention;
Fig. 2 shows a three-dimensional view of a connecting pin according to the present invention in the bent condition;
Fig. 3 shows a three-dimensional view of a connecting pin according to the present invention in the straight condition;
Fig. 4 shows a plane sectional view of a connecting pin according to the present invention in the straight condition;
Figs. 5 and 6 show some possible applications of the joint according to the present invention;
Fig. 7 shows a peg that can be used in combination with a joint according to the present invention; and
Fig. 8 shows a three-dimensional view of the assembly of two parts of the frame of a fitting by the application of a joint according to the present invention (in particular the joint in Fig. 1) and application of the peg of Fig. 7.

Both the description and the drawings are provided only by way of non-limiting example; therefore the present invention can be implemented according to other various embodiments.

### Detailed description of the invention

The mechanical joint described here is an improvement of the joint described and claimed in Italian utility model No. 252348.

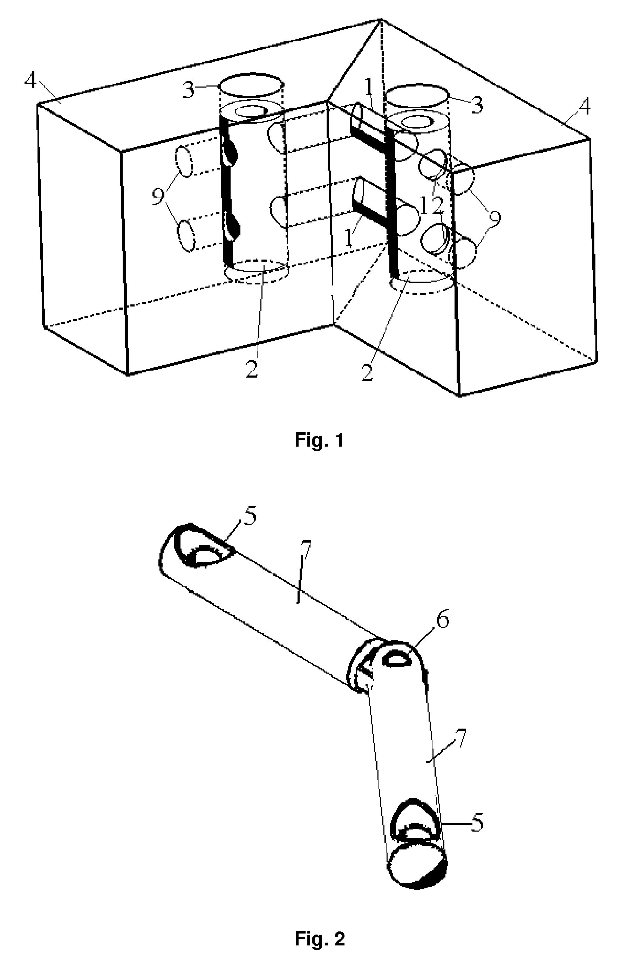

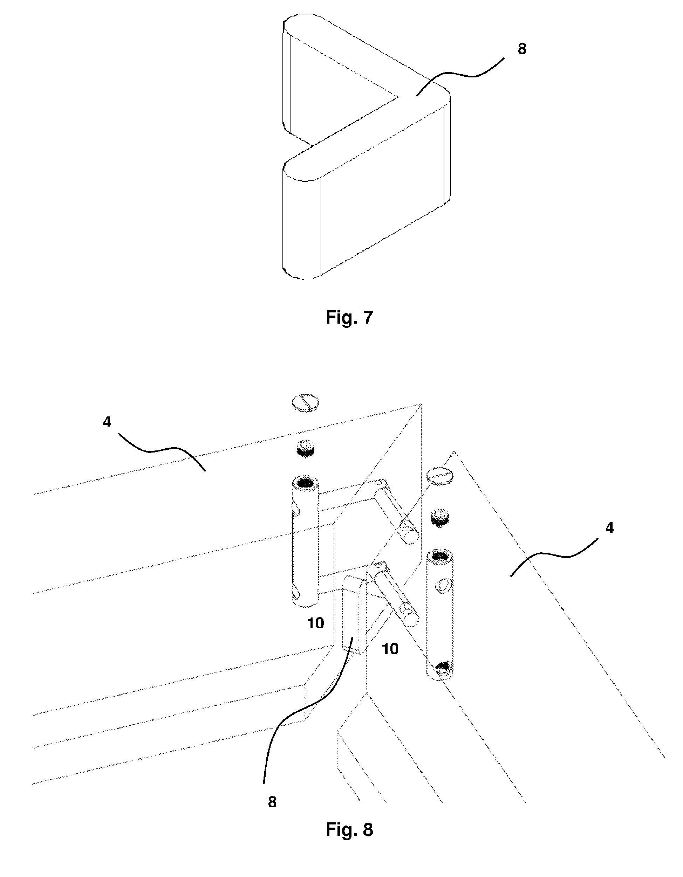

The joint depicted in Fig. 1 joins together two elements (4) by means of two connecting pins (1) and two clamping pins (2) that have holes (12) with shape and dimensions such that the connecting pins (1) can be inserted therein. The shape of the connecting pin (1) that makes it possible to assemble elements (which do not have coaxial holes) is shown according to one embodiment in Figs. 2, 3 and 4. As can be seen, the connecting pin (1) consists of at least two elements (7), cylindrical or of some other section, that will form an angle equal to that formed by the holes present at the interface of the elements (4) to be joined, when the latter are in the assembly position. For assembly of the elements (4) it is sufficient to insert the clamping pins (2) in the two seatings (3) provided for them respectively in the two elements (4) to be joined, which are perpendicular to the seatings (9) respectively made in the same elements (4) for the connecting pins (1). Thus, the two connecting pins (1), as shown in Fig. 1, are inserted in one of the two elements (4) to be joined and the second element (4) is brought close to the first element (4) taking care to insert the projecting part of each connecting pin (1) into the hole (11) arranged if necessary on the second element (4) to be joined. Typically and advantageously, the faying surfaces of the two elements to be joined (4) will be shaped so as to fit perfectly when brought together; preferably, the aforesaid faying surfaces are straight. It should be noted that simpler embodiments of the present invention can also envisage a single connecting pin; alternatively and theoretically, the connecting pins could also be more than two in number. The presence, on the connecting pin (1), of the two countersunk holes (5) that can be seen in Figs. 2, 3 and 4 makes it possible to fix the connecting pin (1) to the clamping pins (2) by means of grub screws (shown only in Fig. 8). The countersinking (5), in particular of oval shape, is provided to allow small relative movements between the two parts and carry out tightening only when they are positioned perfectly.

Two threaded caps (shown only in Fig. 8) that screw into the same hole into which the grub screws are screwed, allow the holes (3) to be closed on completion of assembly.

Figs. 2, 3 and 4 show, in three-dimensional and sectional views, embodiments of the connecting pin (1) for a joint according to the present invention. According to these embodiments the connecting pin (1) consists of two or more elements (7) joined together by a peg (6) that allows the two elements to be constrained but with freedom to vary the angle of incidence. Because of this connecting pin it is possible to assemble, with the same joint, elements to be joined that have different angles between the holes present at the interface.

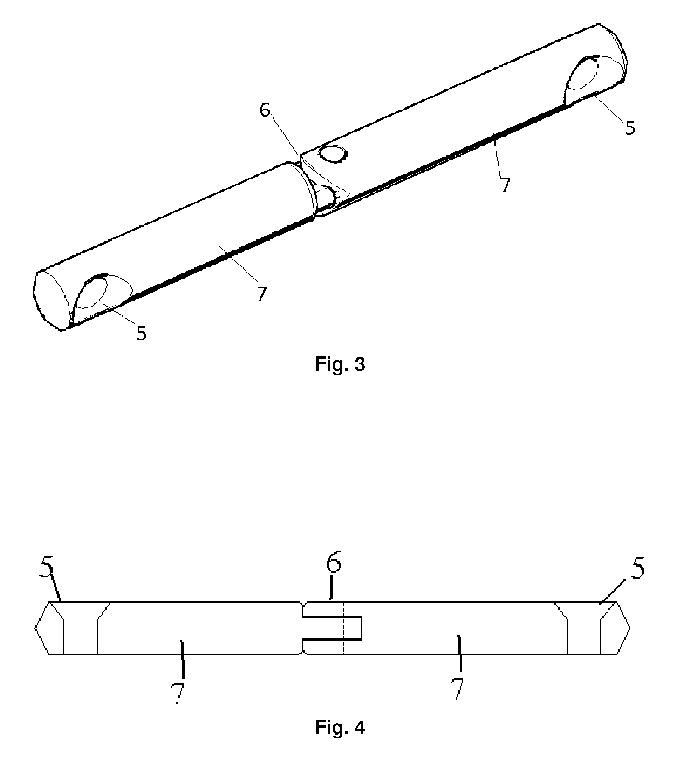

The embodiment in Fig. 3 differs from the embodiment in Fig. 2 with respect to the axis of the holes (5) present in the connecting pin (1). As can be seen, in Fig. 2 the axis of both holes (5) is parallel to the axis of the peg (6), while in Fig. 3 the axis of both holes (5) is perpendicular to the axis of the peg (6); a further variant corresponds to the case when the axis of a first hole (5) is parallel to the axis of the peg (6) and the axis of a second hole (5) is perpendicular to the axis of the peg (6). The usefulness of this variation of angle is evident in cases when there is no space for the operator, who has to tighten the grub screws in the upper part of the elements (4) to be joined.

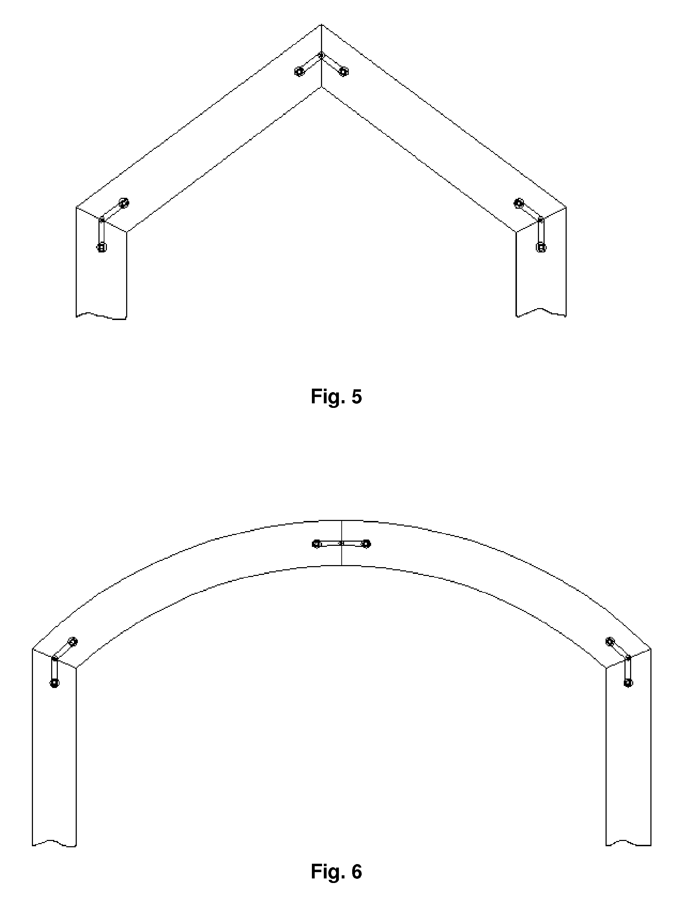

Figs. 5 and 6 show, purely as examples, some possible applications of the joint described here. These apply to the joining of elements that form the frame of two fittings, the first (Fig. 5) having a V-shaped arch and the second (Fig. 6) with an arc-shaped arch.

It should be pointed out that in the drawings the connecting pins (1) are only shown schematically and therefore their peg (6) and therefore possibility of bending is not indicated, although it is present; moreover, in Fig. 1, the elements to be joined (4) are arranged at 90° to one another only as an example; but in Figs. 5 and 6 the angles are for example 90°, 135° and 180°.

By means of connecting pins (1) formed from three or more elements (7) converging in the same hinged joint, it is possible to assemble, by means of a single joint, three or more pieces that converge on the same point.

Fig. 7 shows a peg (8) that can be used, in conjunction with the joint described, for example for protecting, from possible ingress of water, the elements of the frame of a fitting joined together with the joint according to the present invention; said peg (8) is rectilinear and has an "L-shaped" cross-section; as an alternative, it could for example be possible to use two pegs having an "I-shaped" cross-section and arranged perpendicularly to one another, or also a single peg having for example "I", "L", "U", or "V" cross-section, etc.

For using the peg (8), each section of the fitting envisages, as shown schematically in Fig. 8, as well as the hole (9) for receiving the connecting pin (1), a recess (10) with a shape corresponding to that of the cross-section of the peg, for receiving the latter; in this way the peg makes a seal. A recess of the same shape must of course be provided on the second element in order to allow the plate (8) to form a seal between the two elements to be joined.

The arrangement of the hole (9) and of the recess (10) on the faying surface of the elements to be joined (4) can be varied at will, according to the design requirements of the elements to be joined.

## Claims

1. Mechanical joint for reversible coupling of two or more elements (4) brought together at any angle,
comprising at least two clamping pins (2) and at least one connecting pin (1); wherein
- each of said elements (4) has, on the faying surface, at least one hole (9),
- said connecting pin (1) has two ends that are adapted to be inserted respectively into said holes (9) of said two elements (4),
- said clamping pins (2) are adapted to couple to said connecting pin (1) respectively at said two ends and to said two elements (4),
- said connecting pin (1) has an articulation (6) at an intermediate point so as to allow it to bend at any angle;
wherein
at least one of and preferably each of said clamping pins (2) comprises a grub screw for fixing the clamping pin (2) at one end of said connecting pin (1), said end of said connecting pin (1) has a seating or a hole (5) for receiving said grub screw, and said seating or said hole (5) of said connecting pin (1) has a countersunk mouth;
and wherein
said clamping pins (2) have holes (12) with shape and dimensions such that said connecting pin (1) can be inserted therein.

2. Joint according to Claim 1 , **characterized in that** said joint (6) is such as to permit rotations about a single axis of rotation.

3. Joint according to Claim 2, **characterized in that** said connecting pin (1) is formed from two or more elements (7) joined together by a hinge (6) that makes it possible to vary the angle formed by said elements (7), said elements (7) preferably being rectilinear.

4. Joint according to any one of the preceding claims, **characterized in that** said countersunk mouth has an oval countersinking.

5. Joint according to any one of the preceding claims, **characterized in that** at least one of and preferably each of said clamping pins (2) has a through-hole for receiving an end of said connecting pin (1).

6. Joint according to any one of the preceding claims, **characterized in that** at least one of said clamping pins (2) and at least one end of said connecting pin (1) have axes that are perpendicular to one another.

7. Joint according to any one of the preceding claims, **characterized in that** said two elements (4) are of such conformation that two corresponding flat surfaces are brought together on an interface plane, and **in that** said interface plane bisects the angle of bending of said connecting pin (1).

8. Assembly of two faying elements, **characterized in that** it comprises a mechanical joint according to any one of the preceding claims.

9. Assembly according to Claim 8, **characterized in that** said assembly further comprises a peg (8) inserted in both said elements (4) at the faying surface.

10. Assembly according to Claim 9, **characterized in that** said peg (8) is rectilinear and has an "L-shaped" cross-section.

## Patentansprüche

1. Mechanisches Gelenk zum reversiblen Kuppeln von zwei oder mehr Elementen (4), die in einem beliebigen Winkel zusammengeführt werden, umfassend mindestens zwei Spannbolzen (2) und mindestens einen Verbindungsbolzen (1);
wobei
- jedes der Elemente (4) mindestens ein Loch (9) auf der Stoßfläche aufweist,
- der Verbindungsbolzen (1) zwei Enden aufweist, die dafür geeignet sind, jeweils in die Löcher (9) der beiden Elemente (4) eingeführt zu werden,
- die Spannbolzen (2) dafür geeignet sind, mit dem Verbindungsbolzen (1) jeweils an den beiden Enden und mit den beiden Elementen (4) zu kuppeln,
- wobei der Verbindungsbolzen (1) an einem intermediären Punkt ein Gelenkstück (6) aufweist, um ihm zu ermöglichen, sich in einem beliebigen Winkel zu biegen;
wobei
mindestens einer und vorzugsweise jeder der Spannbolzen (2) einen Gewindestift zum Fixieren des Spannbolzens (2) an einem Ende des Verbindungsbolzens (1) aufweist, wobei das Ende des Verbindungsbolzens (1) einen Sitz oder ein Loch (5) zum Aufnehmen des Gewindestifts aufweist und der Sitz bzw. das Loch (5) des Verbindungsbolzens (1) einen versenkten Eingang aufweist;
und wobei
die Spannbolzen (2) Löcher (12) aufweisen, deren Form und Abmessungen derart beschaffen sind, dass der Verbindungsbolzen (1) darin einführbar ist.

2. Gelenk nach Anspruch 1, **dadurch gekennzeichnet, dass** das Gelenk (6) derart beschaffen ist, dass es Rotationen um eine einzelne Rotationsachse erlaubt.

3. Gelenk nach Anspruch 2, **dadurch gekennzeichnet, dass** der Verbindungsbolzen (1) gebildet wird, indem zwei oder mehr Elemente (7) mit einem Scharnier (6) miteinander verbunden werden, das es möglich macht, den von den Elementen (7) gebildeten Winkel zu variieren, wobei die Elemente (7) vorzugsweise geradlinig sind.

4. Gelenk nach einem der vorhergehenden Ansprüche, **dadurch gekennzeichnet, dass** der versenkte Eingang eine ovale Einsenkung aufweist.

5. Gelenk nach einem der vorhergehenden Ansprüche, **dadurch gekennzeichnet, dass** mindestens einer und vorzugsweise jeder der Spannbolzen (2) eine Durchgangsbohrung zum Aufnehmen eines Endes des Verbindungsbolzens (1) aufweist.

6. Gelenk nach einem der vorhergehenden Ansprüche, **dadurch gekennzeichnet, dass** mindestens einer der Spannbolzen (2) und mindestens ein Ende des Verbindungsbolzens (1) Achsen aufweisen, die senkrecht zueinander verlaufen.

7. Gelenk nach einem der vorhergehenden Ansprüche, **dadurch gekennzeichnet, dass** die beiden Elemente (4) eine derartige Konformation aufweisen, dass zwei korrespondierende Flächen auf einer Zwischenebene zusammengeführt werden, und dass diese Zwischenebene den Biegewinkel des Verbindungsbolzens (1) halbiert.

8. Anordnung aus zwei Stoßflächen, **dadurch gekennzeichnet, dass** sie ein mechanisches Gelenk nach einem der vorhergehenden Ansprüche aufweist.

9. Anordnung nach Anspruch 8, **dadurch gekennzeichnet, dass** die Anordnung ferner einen Stift (8) aufweist, der in die beiden Elemente (4) an der Stoßfläche eingeführt ist.

10. Anordnung nach Anspruch 9, **dadurch gekennzeichnet, dass** der Stift (8) geradlinig ist und einen "L-förmigen" Querschnitt aufweist.

## Revendications

1. Joint mécanique pour l'assemblage réversible d'au moins deux éléments (4) selon un angle d'assemblage quelconque,
comprenant au moins deux broches de serrage (2) et au moins une broche de liaison (1) ; dans lequel
- chacun desdits éléments (4) présente, sur l'aire de contact, au moins un trou (9),
- ladite broche de liaison (1) présente deux extrémités conçues pour être respectivement insérées dans lesdits trous (9) desdits deux éléments (4),
- lesdites broches de serrage (2) sont conçues pour se coupler à ladite broche de liaison (1) respectivement au niveau desdites deux extrémités et auxdits deux éléments (4),
- ladite broche de liaison (1) présente une articulation (6) en un point intermédiaire lui permettant de se plier à n'importe quel angle;
dans lequel
au moins une et de préférence chacune desdites broches de serrage (2) comprend une vis sans tête permettant de fixer la broche de serrage (2) à une extrémité de ladite broche de liaison (1), ladite extrémité de ladite broche de liaison (1) présente un logement ou un trou (5) destiné à recevoir ladite vis sans tête, et ledit logement ou ledit trou (5) de ladite broche de liaison (1) présente une ouverture fraisée;
et dans lequel
lesdites broches de serrage (2) présentent des trous (12) dont la forme et les dimensions leur permettent de recevoir ladite broche de liaison (1).

2. Joint selon la revendication 1, **caractérisé en ce que** ledit joint (6) est tel qu'il permet des rotations sur un seul axe de rotation.

3. Joint selon la revendication 2, **caractérisé en ce que** ladite broche de liaison (1) est formée par au moins deux éléments (7) reliés l'un à l'autre par une charnière (6) qui permet de modifier l'angle formé par lesdits éléments (7), lesdits éléments (7) étant de préférence rectilignes.

4. Joint selon l'une quelconque des revendications précédentes, **caractérisé en ce que** ladite ouverture fraisée présente un fraisage ovale.

5. Joint selon l'une quelconque des revendications précédentes, **caractérisé en ce qu'**au moins une et de préférence chacune desdites broches de serrage (2) présente un trou débouchant destiné à recevoir une extrémité de ladite broche de liaison (1).

6. Joint selon l'une quelconque des revendications précédentes, **caractérisé en ce qu'**au moins une desdites broches de serrage (2) et au moins une extrémité de ladite broche de liaison (1) présentent des axes perpendiculaires entre eux.

7. Joint selon l'une quelconque des revendications précédentes, **caractérisé en ce que** lesdits deux éléments (4) sont de conformation telle que deux surfaces planes correspondantes sont assemblées sur un plan d'interface et **en ce que** ledit plan d'interface forme la bissectrice dudit angle de pliage de ladite broche de liaison (1).

8. Assemblage de deux éléments en contact, **caractérisé en ce qu'**il comprend un joint mécanique selon l'une quelconque des revendications précédentes.

9. Assemblage selon la revendication 8, **caractérisé en ce que** ledit assemblage comprend en outre un taquet (8) inséré dans lesdits deux éléments (4) au niveau de l'aire de contact.

10. Assemblage selon la revendication 9, **caractérisé en ce que** ledit taquet (8) est rectiligne et présente une section transversale en forme de L.
